# EUROPEAN PATENT SPECIFICATION

(11) **EP 1 428 734 B1**
(45) Date of publication and mention of the grant of the patent: **27.02.2008**
(21) Application number: 02293042.4
(22) Date of filing: 09.12.2002
(51) Int. Cl.: B60S 1/24, F16C 23/10, F16C 11/06

(54) **Drive linkage for an automotive windshield wiper system**
Antriebsgestänge für einen Kraftfahrzeugscheibenwischer
Tringlerie d'entraînement pour un système d'essuie-glace de véhicule

(43) Date of publication of application: 16.06.2004
(73) Proprietor: VALEO SYSTEMES D'ESSUYAGE, 78321 La Verrière (FR)
(72) Inventor: Princet, Joel, 86100 Chatellerault (FR); Egner-Walter, Bruno, 74076 Heilbronn (DE); Edele, Reinhard, 74321 Bietigheim-Bissingen (DE)

(56) References cited:
- EP-A- 0 612 927
- DE-A- 1 906 440
- DE-A- 3 241 551
- DE-A- 4 011 179
- DE-A- 19 746 376
- US-A- 4 157 666
- US-A- 5 142 939
- US-A- 5 473 955

## Description

The present invention relates to a drive linkage for an automotive windshield wiper system and to a method of pre-assembling such a drive linkage.

A drive linkage for an automotive windshield wiper system usually comprises a crank mounted on and driven by an output shaft of an electric motor, one link member for each wiper and a ball joint for each link member to pivotally connect the link member with the crank. A ball joint typically has a ball stud with a ball portion and a co-axial shaft portion. The shaft portion has a threaded end and is assembled with the crank by insertion in a through hole of the crank and engaging a screw nut on the threaded end of the shaft portion.

The wiping area on the windshield is determined by the pivotal movement of the wipers which, in turn, depends on the complex movement of the link members. The predominant factor that determines movement of the link members is the radius on which a link member is connected to the crank with respect to the axis of the output shaft of the electric motor.

To compensate for tolerances in manufacture, it would therefore be advantageous to permit adjustment of such radius upon assembly of the linkage. One way to adjust the radius is to provide each ball joint with a ball stud that has a ball portion eccentric with respect to the shaft portion and to mount the ball stud on the crank in the appropriate angular position with respect to the axis of the ball stud.

DE-A-197 46 376 discloses the preamble of claims 1 and 14.

The present invention provides a drive linkage for an automotive windshield wiper system, and a method of pre-assembling such drive linkage, that permit an easy and economic compensation for manufacturing tolerances of its components.

Specifically, the invention provides a method of pre-assembling a drive linkage for an automotive windshield wiper system, the linkage comprising a crank, a link member and at least one ball joint connecting the link member with the crank. A ball stud is provided with a ball portion and a shaft portion that has an axis shifted with respect to an axis passing through the centre of the ball portion. A cylindrical mounting hole is provided in the crank. An end of the shaft portion is presented co-axially in front of the mounting hole. The ball stud is rotated about the axis of the shaft portion to a predetermined position with respect to the crank. The shaft portion of the ball stud is then press-fitted in the mounting hole while the ball stud is maintained in the predetermined position about the axis of the mounting hole. Thus, by rotating the ball stud about its axis until the outer periphery of the eccentric ball portion has assumed a position corresponding to the required distance from the centre of rotation of the crank, even large tolerances of manufacture can be compensated for. The final assembly of the ball stud with the crank is an straightforward operation requiring only a pressing action. Double ball joints for connecting a pair of link members to the crank, one for each wiper, can be produced in a generally similar manner by engaging with a press-fit a shaft portion of one of a pair of ball studs in a hole or sleeve of the other. Both ball studs may have an eccentric ball portion so that each of the two ball joints may be adjusted precisely independent of the other by rotation of the respective ball stud about its axis. In the preferred embodiment of the inventive method, the crank, the ball stud and the link member are provisionally assembled with a releasable fit of the ball stud shaft in the mounting hole of the crank. The resulting assembly is then installed on a measurement bench and operated through at least one complete wiping cycle. During such test wiping cycle, an error of the resulting wiping pattern is detected. The detected error is then corrected by rotating the ball stud about the axis of the shaft portion by an amount determined to correct the detected error. In the final step, the shaft portion of the ball stud is permanently fixed in the mounting hole with a press-fit. These operations are preferably automated and controlled by computer. By detecting the error in a test cycle after the provisional assembly, all cumulated tolerances are taken into account.

The inventive drive linkage for an automotive windshield wiper system, comprises a crank, a link member and at least one ball joint connecting the link member with the crank. The ball joint comprises a ball stud with a ball portion and a shaft portion that has an axis shifted with respect to an axis passing through the centre of the ball portion. The crank has a mounting hole, and the shaft portion of the ball stud is press-fitted into the mounting hole in a predetermined angular position about the axis of the shaft portion.

For a wiper system requiring a double ball joint, and in accordance with an embodiment here not claimed, a drive linkage for an automotive windshield wiper system comprises a crank, a pair of link members and a pair of ball joints each connecting the crank with one of the pair of link members. A first one of the pair of ball joints comprises a first ball stud with a ball portion and a shaft portion axially opposite the ball portion. A second one of the pair of ball joints comprises a second ball stud with a ball portion and a sleeve portion, the sleeve portion having a cylindrical engagement hole axially opposite the ball portion. The crank has a mounting hole, and the shaft portion of the first ball stud is press fitted into the engagement hole in the sleeve portion of the second ball stud while the sleeve portion of the second ball stud is press-fitted into the mounting hole of the crank.
Further advantages and features of the invention will become apparent from the following description of several embodiments with reference to the drawings. In the drawings:
- Figure 1 schematically illustrates th e geometry of a conventional drive linkage for an automotive wind shield wiper system;
- Figure 2 is a partially sectioned view illustrating the adjustment and mounting steps during assembly of a ball stud with a crank;
- Figure 3 is a similar view illustrating adjustment and mounting steps for a double-type ball stud;
- Figure 4 is a sectional view of an assembled double ball joint;
- Figure 5 is a partially sectioned per spective view illustrating angular adjustment of an eccentric ball stud prior to the assembly step;
- Figure 6 is a similar view showing the ball stud in a condition assembled with a crank;
- Figure 7 is a view corresponding to that of Figure 5, but showing an alternative embodiment;
- Figure 8 is a view corresponding to Figure 6, but illustrating the alternative embodiment;
- Figure 9 is a sectional view of an assembled ball joint connecting a link member with a crank;
- Figure 10a shows components of a double ball stud prior to assembly;
- Figure 10b is a similar view, but showing one component in an axial section;
- Figure 11a shows the components of Figure 10 in an assembled condition;
- Figure 11b is similar to Figure 11a, but shows one of the components in an axial section;
- Figure 12 is an enlarged view of detail "A" in Figure 10a;
- Figure 13 shows an alternative embodiment of a double ball stud as viewed in different rotational positions; and
- Figure 14 is a view corresponding to that of Figure 13, but partially sectioned.

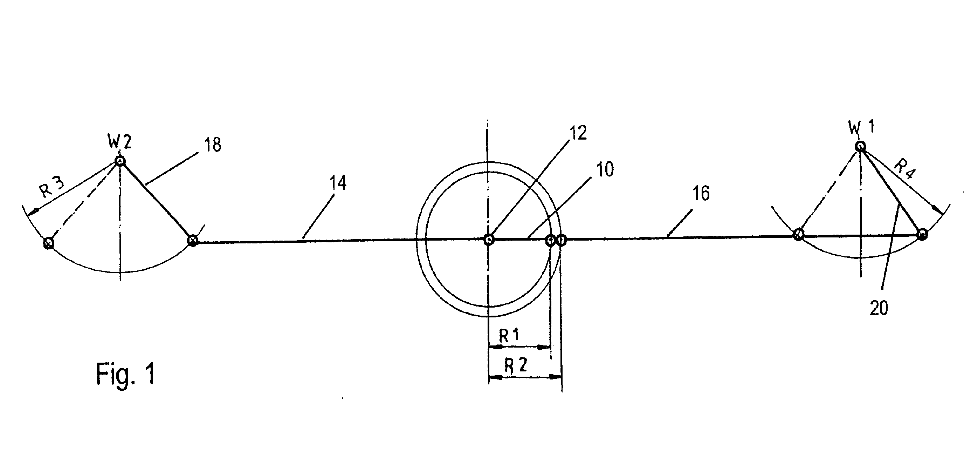

In a conventional drive linkage for an automotive wind shield wiper system, as seen in Figure 1, a crank 10 is driven in rotation by an output shaft 12 of an electric motor. The outer end of crank 10 is coupled to first ends of a pair of link members 14, 16, the second ends of which are connected to one of a pair of crank arms 18, 20. Each crank arm 18, 20 is connected to a pivot shaft on which a wiper arm is mounted.

Essential parameters that determine the wiping pattern on the wind shield are:
- a first radius R1 on which link member 14 is connected to crank 10;
- a second radius R2 on which link member 16 is connected to crank 10;
- a third radius R3 equivalent to the length of crank arm 18;
- a fourth radius R4 equivalent to the length of crank arm 20.

Usually, the third and fourth radiuses R3 and R4 should be equal.

In a conventional drive linkage, these parameters are adjusted after assembly to achieve a desired wiping pattern on the wind shield.

The connections between crank 10 and both link members 14, 16 are each materialized by a ball joint. Ball joints are also used to connect the link members 14, 16 to each of the crank arms 18, 20.

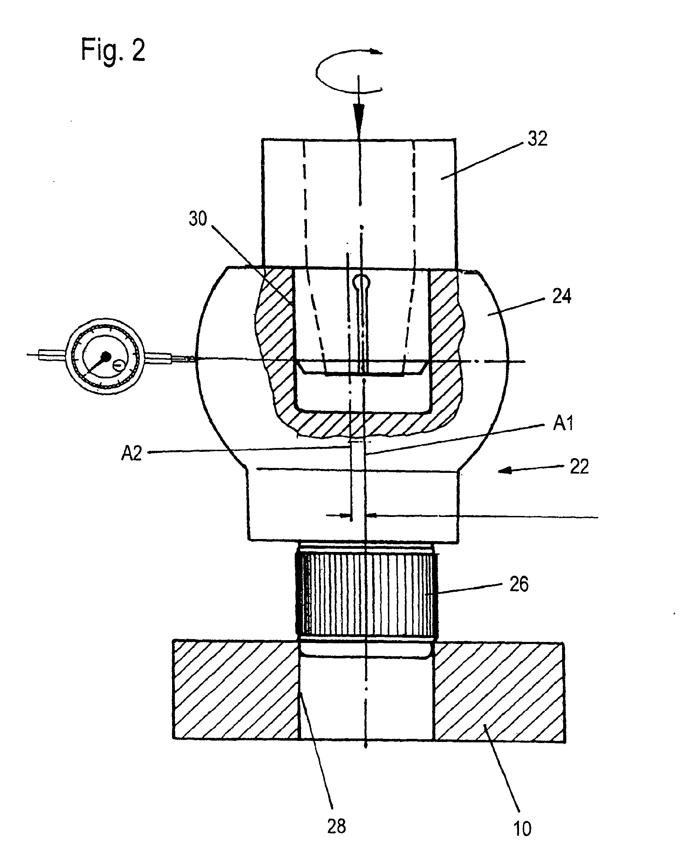

A ball joint consists of a ball stud and a socket engaged around the ball portion of the ball stud. In Figure 2, a ball stud 22 to be assembled with crank 10 is shown. Ball stud 22 consists of a ball portion 24 and a shaft portion 26. Shaft portion 26 is cylindrical with a knurled peripheral surface. Crank 10 has a cylindrical mounting hole 28 the diameter of which is slightly smaller than the outer diameter of shaft portion 26. Shaft portion 26 has an axis A1 that is shifted from an axis A2 passing through the center of ball portion 24. Thus, ball portion 24 is eccentric with respect to shaft portion 26. On its axial side opposite the shaft portion 26, the ball portion 24 has a flat, and a cylindrical engagement hole 30 extends inwardly from the flat into ball portion 24. Engagement hole 30 is coaxial with shaft portion 26.

Prior to assembly of ball stud 22 with crank 10, the shaft portion 26 is coaxially aligned with and presented in front of mounting hole 28, as seen in Figure 2. The distance of the peripheral surface of wall portion 24 is measured with respect to a fixed reference along an equatorial line of ball portion 24. A special clamping and pressing tool 32 is preferably used to hold an rotate ball stud 22 during this operation. Tool 32 has flexibly spreadable clamping fingers on its end penetrating into engagement hole 30, and an axially movable shaft that has a tapered forward end penetrates between the clamping fingers urging them outwardly and into engagement with the surface of the engagement hole 30.

After the ball stud 22 has been adjusted to the correct angular position about axis A1, corresponding to a predetermined distance of its peripheral surface from the fixed reference, shaft portion 26 is engaged in mounting hole 28 with a press-fit. Additional riveting is usually not required, but may be applied to reinforce the connection between crank 10 and ball stud 22.

The engagement hole 30 serves multiple purposes. Besides facilitating the adjustment and assembly steps, the engagement hole 30 may cooperate with a limiting member on the socket part of the ball joint, that penetrates into the hole and abuts against its internal walls to limit pivotal movement between the socket and the ball stud.

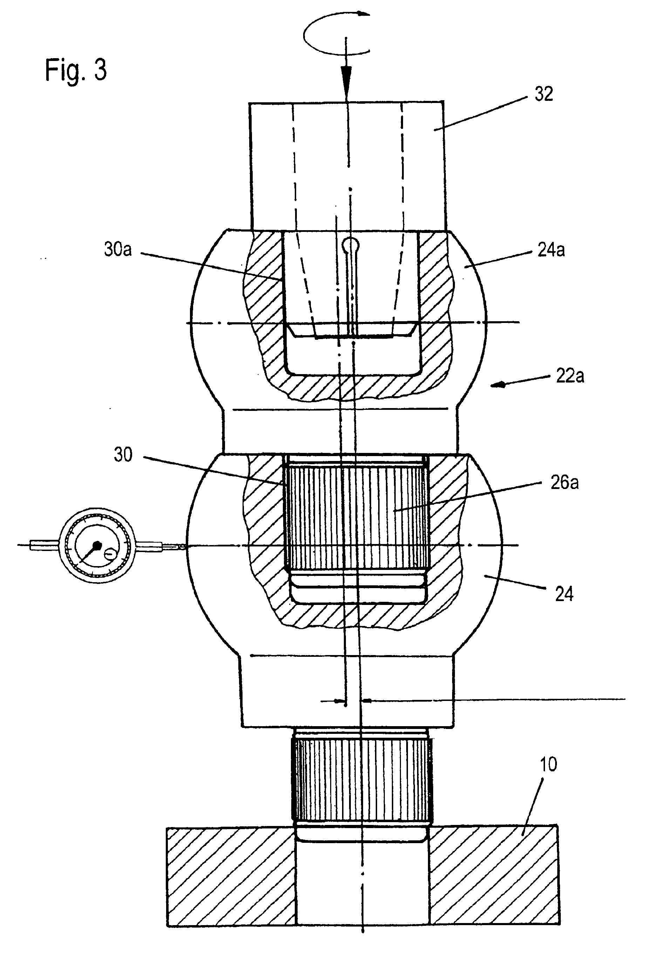

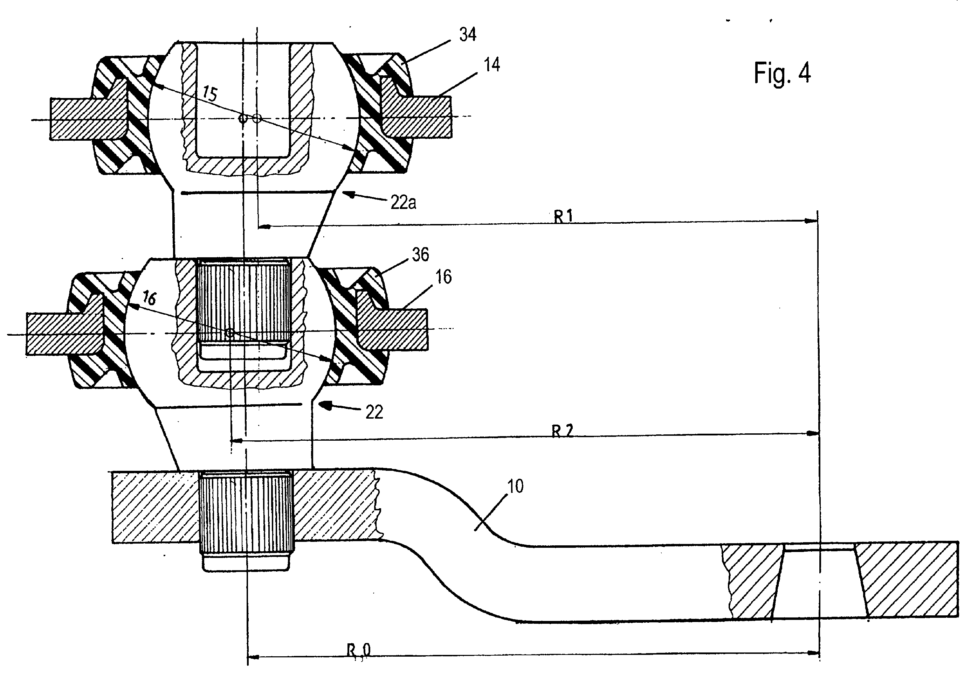

Another use of engagement hole 30 is apparent from Figure 3. As seen in that figure, a double ball stud can be formed easily by engaging the shaft portion 26a of a second ball stud 22a into engagement hole 30 of ball portion 24. Ball studs 22 and 22a are generally similar, although ball stud 22a may have a ball portion 24a with a smaller diameter. In particular, ball stud 22a also has a ball portion 24a that is eccentric with respect to its shaft portion 26a. Prior to assembly of the double ball stud with crank 10, ball stud 22a is adjusted by rotation about the axis of its shaft portion 26a until studs 22 and 22a are correctly aligned. Shaft portion 26a is then engaged in hole 30 with a press-fit. Thereafter, the adjustment and assembly steps are carried out in a manner similar to that described with respect to Figure 4, except that clamping and pressing tool 32 will engage into engagement hole 30a of ball stud 22a.

Figure 4 shows crank 10 as assembled with a double ball joint as obtained by the steps illustrated in Figure 3, the socket portions 34, 36 of the ball joints and the link members 14, 16 being also shown. As a result of the adjustment steps, link member 14 is connected to crank 10 on an effective radius R1, and link member 16 is connected to crank 10 on an effective radius R2 with respect to the axis of rotation of crank 10.

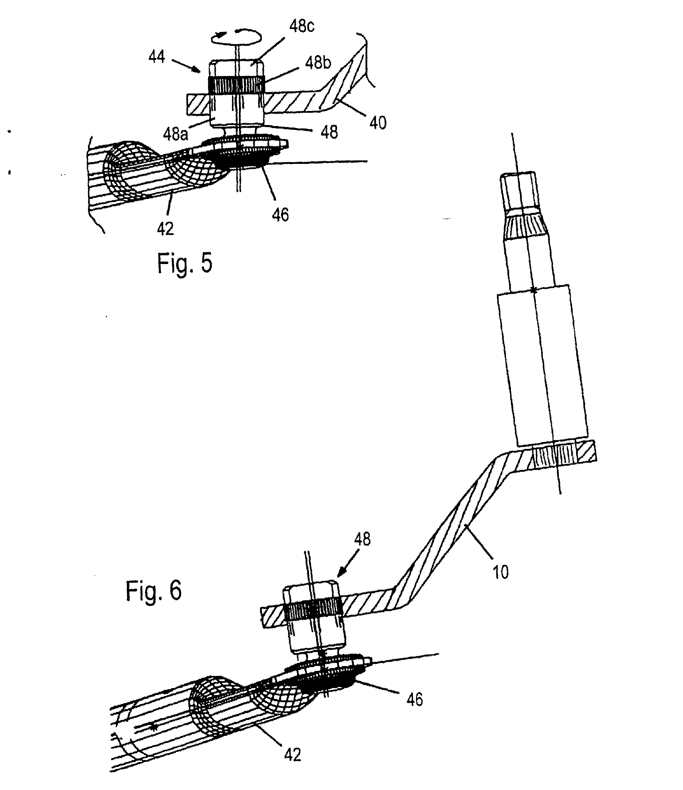

In the embodiment shown in Figures 5 and 6, a crank 40 is connected to a link member 42 by means of a ball joint that consists of a ball stud 44 and a socket 46. Ball stud 44 has a shaft portion 48 whereon three axially adjacent sections can be identified: a guiding section 48a, a mounting section 48b and an engagement section 48c, the mounting section 48b having a knurled peripheral surface and being located between the guiding section 48a and the engagement section 48c. In the condition shown in Figure 5, guiding section 48a is accommodated in a mounting hole of crank 40 with a loose fit so that rotation of ball stud 44 remains possible. In this embodiment, too, ball stud 44 has an eccentric ball portion so that rotation about the axis of shaft portion 48, as indicated in Figure 5 by an arrow, allows for an adjustment of the ball joint similar to the embodiment in Figure 2. Engagement section 48c is configured to match with a special tool (not shown) used to rotate ball stud 48 about its axis. When the correct rotational position of ball stud 48 is achieved, pressure is exerted axially on the end of engagement section 48c so that the mounting section 48b penetrates into the mounting hole of crank 40 and is engaged therein with a press-fit. A final assembly condition is illustrated in Figure 6.

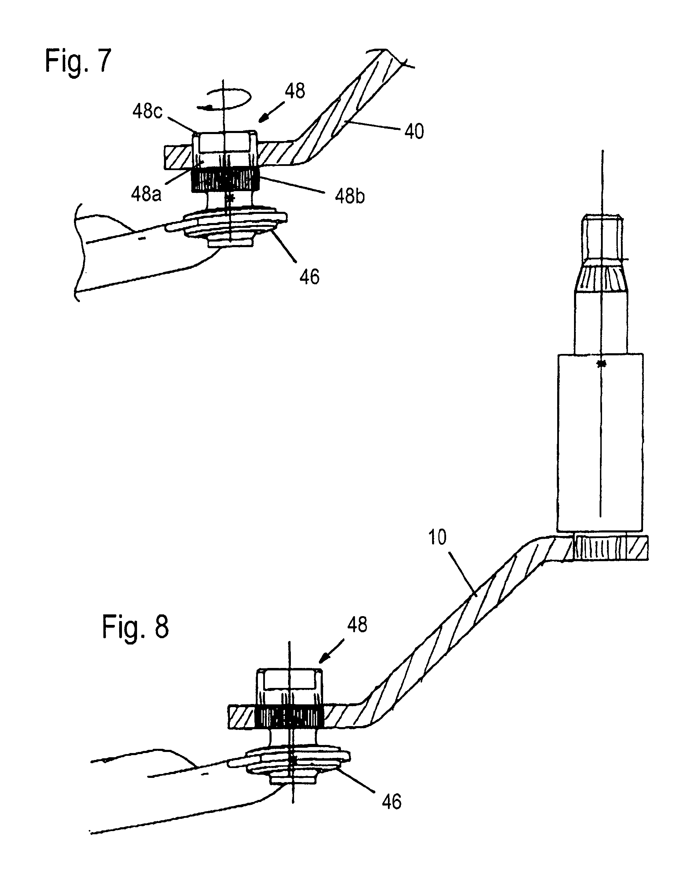

The embodiment shown in Figures 7 and 8 is generally similar to that in Figures 5 and 6, but the mounting section 48b with the knurled peripheral surface is located on the side of the ball portion of ball stud 48, and the guide section 48a is located between engagement section 48c and mounting section 48b. While rotary adjustment in this embodiment is the same as that in the embodiment of Figures 5 and 6, the final assembly step requires axial pressure to be exterted from the side of the ball portion of ball stud 48. Figure 8 shows the ball joint in the assembled condition.

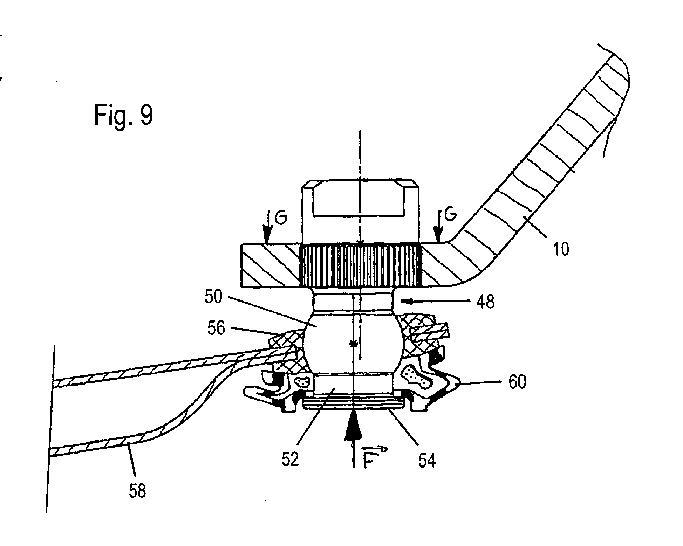

As seen in Figure 9, to allow axial pressure to be exerted on the ball portion 50 of ball stud 48, the ball portion 50 has a cylindrical extension 52 on its side axially opposite the shaft portion, terminating with a radially projecting flange 54. In the final assembly step, a pressure force F acts on flange 54, as seen in Figure 9. Reaction forces G act on crank 10, as also illustrated in Figure 9.

After assembly of ball stud 48 with crank 10, a socket 56 is threaded over ball portion 50 to connect link member 58. An annular, bellows-type sealing sleeve 60 has a first axial end connected to socket 56 and a second axial end engaged about the cylindrical extension 52 and retained thereon by flange 54, acting as a retainer flange. Sealing sleeve 60 encloses a lubricant such as grease.

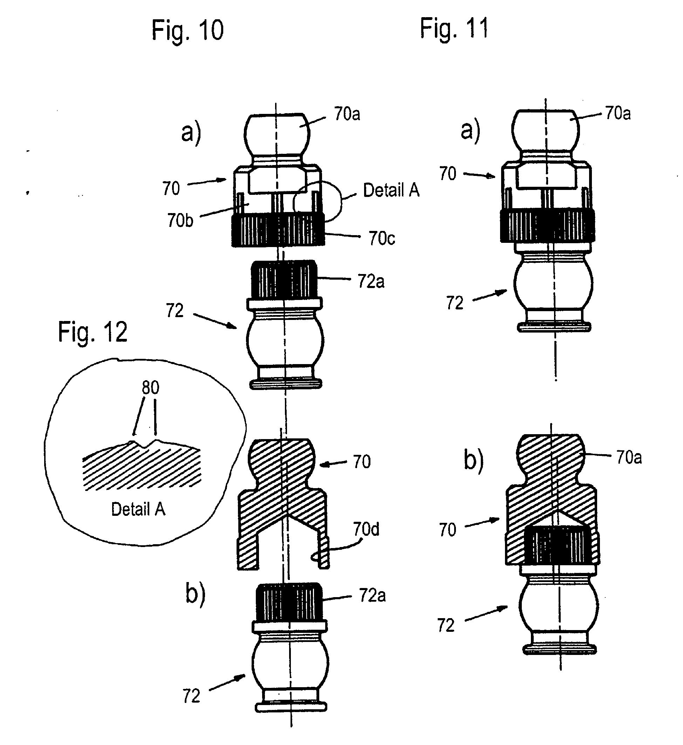

Figures 10 and 11 show an embodiment of a double ball stud for use in the invention. The double ball stud consists of a first, female ball stud member 70 and a second, male ball stud member 72. Female ball stud member 70 consists of a ball portion 70a and a sleeve portion 70b. Sleeve portion 70b has a peripheral knurled engagement surface 70c for a press-fit in a mounting hole of the crank and an eccentric cylindrical engagement hole 70d. Male stud member 72 has a shaft portion 72a with a knurled peripheral surface for a press-fit in the engagement hole 70d of female stud member 70. Figure 10 shows the female stud member 70 and the male stud member 72 prior to assembly with each other. Figure 11 shows both stud members in the assembled condition where the shaft portion 72a of male stud member 72 is engaged in hole 70d of female stud member 70 with a press-fit. As is seen, male stud member 72 has a ball portion that is coaxial with its shaft portion, but the axis of stud member 72 is shifted with respect to an axis passing through the center of the ball portion 70a of stud member 70.

Assembly of the double ball stud with a crank is made in a manner similar to that in the embodiment of Figure 9. Prior to the final pressing step, the double ball stud is rotated about the axis of the female stud member 70 to achieve the required amount of eccentricity of stud member 72.

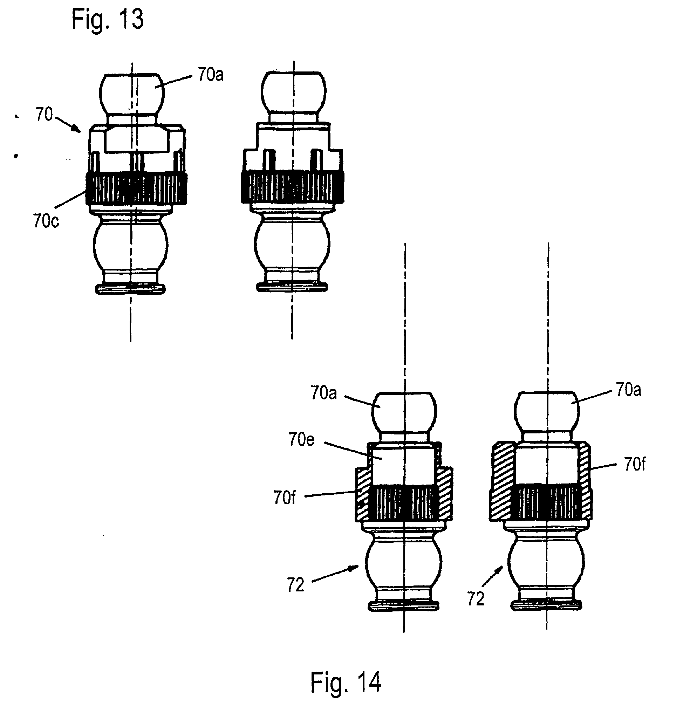

Such adjustment by rotation of the double ball stud is facilitated by a feature referred to as "detail A" in Figure 10, which is separately shown in Figure 12 on an enlarged scale. According to this feature, the sleeve portion 70b of female stud member 70 is provided with a number of axially extending ribs 80 which slightly project radially. These ribs 80 provide a loose fit in the mounting hole of the crank. After the double ball stud has been rotated to the correct position in the mounting hole of the crank, it is maintained in that position during the final pressing step by engagement of the ribs 80 into the material defining the mounting hole. Similar ribs can also be used in the embodiments shown in Figures 5 to 8, and also in the further embodiment that will now be described with reference to Figures 13 and 14.

The embodiment in Figures 13 and 14 is generally similar to that in Figures 10 and 11, with two exceptions. First, the female stud member 70 has a ball portion 70a that is eccentric with respect to the knurled engagement section 70c. Second, as seen in the sectional view of Figure 14, the female stud member 70 is composed of a stud portion 70e integrally formed with head portion 70a, and a sleeve portion 70f fitted around shaft portion 70e. The sleeve portion 70f is firmly connected to shaft portion 70e such as by soldering or crimping. The knurled shaft portion of stud member 72 is engaged in sleeve member 70f with a press-fit.

## Claims

1. A method of pre-assembling a drive linkage for an automotive windshield wiper system, the linkage comprising a crank (10), a link member (14, 16, 42) and at least one ball joint connecting the link member with the crank (10, 40), comprising the steps of
a) providing a ball stud (22, 44) with a ball portion (24) and a shaft portion (26, 48) that has an axis (A1) shifted with respect to an axis (A2) passing through the centre of the ball portion (24);
b) providing a cylindrical mounting hole (28) in said crank (10, 40) ;
c) presenting an end of the shaft portion (26) co-axially in front of the mounting hole (28);
d) rotating the ball stud (22) about the axis (A1) of the shaft portion (26) to a predetermined position with respect to said crank (10, 40);
e) and press-fitting the shaft portion (26) of the ball stud (22) in the mounting hole (28) while the ball stud (22) is maintained in the predetermined position about the axis (A1) of the mounting hole (28),
**characterised in that** a rotatable press tool is engaged into a cylindrical engagement hole (30) that extends coaxially with the shaft portion (26) from an axial end opposite the shaft portion in the ball portion to rotate the stud member to the predetermined position and subject the ball stud to axial pressure in the press-fitting step.

2. The method according to claim 1, **characterised in that** the predetermined position of the ball stud (22) is determined by measuring the distance between the periphery of the ball portion and a fixed reference.

3. The method according to any of the preceding claims, **characterised in that** the press tool (32) has a head portion with radially flexible clamping fingers and a spreading member to urge the clamping fingers radially outwardly into clamping engagement with internal wall portions of the engagement hole (30).

4. The method according to any of the preceding claims, **characterised in that** a pair of similar ball studs (22, 22a) are assembled by engaging with a press-fit the shaft portion (26a) of one ball stud (22a) into the engagement hole (30) of the other ball stud (22), and the shaft portion (26) of the other ball stud (22) is engaged with a press-fit into the mounting hole (28) of the crank (10).

5. The method according to claim 4, **characterised in that** each of the pair of ball studs (22, 22a) is rotated to and mounted in a respective predetermined position relative to the axis of the mounting hole.

6. The method according to any of the preceding claims, **characterised in that** the shaft portion (26, 26a) of the ball stud (22, 22a) is provided with a knurled peripheral surface.

7. The method according to claim 1, **characterised in that** the shaft portion (48) of the ball stud (44) is provided with a guide section and with an interference section axially adjacent to the guide section, the guide section is rotatably received in the mounting hole of the crank (10, 40) for rotation to the predetermined position, and the ball stud (44) is then subjected to axial pressure to introduce the interference section with a press-fit into the mounting hole.

8. The method according to claim 7, **characterised in that** the guide section is provided with axially extending engagement ribs (80) dimensioned to pre-fix the shaft portion in the mounting hole while permitting rotation of the ball stud.

9. The method according to claim 7 or 8, **characterised in that** the guide section is provided between the interference section and the ball part and axial pressure is exerted on the shaft part of the ball stud.

10. The method according to claim 7 or 8, **characterised in that** the interference section is provided between the guide section and the ball part and axial pressure is exerted on the ball part of the ball stud.

11. The method according to claim 1, **characterised in that** the ball portion of the ball stud is provided with an engagement extension opposite the shaft portion.

12. The method according to claim 11, **characterised in that** the engagement extension is provided with a retainer flange (54) and a bellows-type sealing sleeve (60) is fitted over at least part of the ball portion and is axially retained by the retainer flange (54).

13. The method according to any of claims 1 to 12, **characterised in that** the crank (10, 40), the ball stud and the link member are assembled with a releasable fit of the ball stud shaft in the mounting hole of the crank, the resulting assembly is installed on a measurement bench and operated through at least one complete wiping cycle, an error of the resulting wiping pattern is detected, the detected error is corrected by rotating the ball stud about the axis of the shaft portion by an amount determined to correct the detected error, and the shaft portion of the ball stud is permanently fixed in the mounting hole with a press-fit.

14. A drive linkage for an automotive windshield wiper system, comprising a crank (10, 40), a link member (14, 16) and at least one ball joint connecting the link member (14, 16) with the crank (10, 40),
- the ball joint comprising a ball stud (22) with a ball portion (24) and a shaft portion (26) that has an axis (A1) shifted with respect to an axis (A2) passing through the centre of the ball portion (24);
- the crank (10) having a mounting hole (28); and
- the shaft portion (26) of the ball stud (22) being press-fitted into the mounting hole (28) in a predetermined angular position about the axis (A1) of the shaft portion,
**characterised in that**
the ball portion (24) of the ball stud (22) has a cylindrical engagement hole (30) that extends inwardly co-axially with the shaft portion from an axial end opposite the shaft portion, wherein the engagement hole (30) receives a rotatable press tool that subjects the ball stud to axial pressure in the press-fitting step.

15. The drive linkage according to claim 14, wherein the ball portion (24) of the ball stud (22) has a flat on its axial end opposite the shaft portion and the engagement hole extends from the flat.

16. The drive linkage according to claim 14 or claim 15, comprising a further ball joint for connection of the crank to a further link member, the further ball joint having a further ball stud (22a) with a ball portion (24a) and a shaft portion (26a), said shaft portion (26a) having an axis shifted with respect to an axis passing through the centre of said ball portion, and said shaft portion of said further ball stud being press-fitted into the cylindrical engagement hole.

17. The drive linkage according to any of claims 14 to 16, wherein the shaft portion of the ball stud has a knurled peripheral surface.

18. The drive linkage according to any of claims 14 to 16, wherein the shaft portion of the ball stud has a plurality of axially extending engagement ribs slightly projecting on the peripheral surface of the shaft portion.

19. The drive linkage according to claim 18, wherein a knurled peripheral engagement surface extends on a first axial section and the engagement ribs extend on a second axial section of the shaft portion adjacent the first section.

20. The drive linkage according to any of claims 14 to 19, wherein the ball portion of the ball stud has an axial engagement extension provided with a radially projecting retainer flange (54), and a bellows-type sealing sleeve (60) is fitted over at least part of the ball portion and is axially retained by the retainer flange (54).

## Patentansprüche

1. Verfahren zur Vormontage einer Antriebsverbindung für ein Kraftfahrzeug-Windschutzscheiben-Wischersystem (10), wobei die Verbindung eines Krampe (10), ein Verbindungselement (14, 16, 42) und wenigstens ein das Verbindungselement mit der Krampe (10, 40) verbindendes Kugelgelenk umfasst, das die folgenden Schritte umfasst:
a) Vorsehen eines Kugelansatzes (22, 44) mit einem Kugelabschnitt (24) und einem Wellenabschnitt (26, 48), der eine Achse (A1) aufweist, die im Verhältnis zu einer durch die Mitte des Kugelabschnitts (24) durchtretende Achsen (A2) verschoben ist;
b) Vorsehen einer zylindrischen Einbauöffnung (28) in der genannten Krampe (10, 40);
c) Aufweisen eines Endes des Wellenabschnitts (26) koaxial zur Vorderseite der Einbauöffnung (28) ;
d) Drehen des Kugelansatzes (22) um die Achse (A1) des Wellenabschnitts (26) in eine vorbestimmte Position im Verhältnis zur genannten Krampe (10, 40);
e) und Presspassung des Wellenabschnitts (26) des Kugelansatzes (22) in die Einbauöffnung (28), während der Kugelansatz (22) in der vorbestimmten Position um die Achse (A1) der Einbauöffnung (28) beibehalten wird,
**dadurch gekennzeichnet, dass** ein drehbares Presspassungswerkzeug in eine zylindrische Eingreiföffnung (30) zum Eingreifen kommt, die sich koaxial zum Wellenabschnitt (26) von einem axialen Ende gegenüber dem Wellenabschnitt im Kugelabschnitt erstreckt, um das Ansatzelement zur vorbestimmten Position zu drehen und den Kugelansatz in der Presspassungsstufe axialem Druck zu unterziehen.

2. Verfahren gemäß Anspruch 1, **dadurch gekennzeichnet, dass** die vorbestimmte Position des Kugelansatzes (22) durch Messen der Entfernung zwischen der Peripherie des Kugelabschnitts und einer festen Referenz bestimmt wird.

3. Verfahren gemäß einem der vorherigen Ansprüche, **dadurch gekennzeichnet, dass** das Presspassungswerkzeug (32) einen Kopfabschnitt mit radial flexiblen Klemmfingern und einem sich erstreckenden Element aufweist, das die Klemmfinger radial nach außen in klemmendes Eingreifen mit internen Wandabschnitten der Eingreiföffnung (30) drückt.

4. Verfahren gemäß einem der vorherigen Ansprüche, **dadurch gekennzeichnet, dass** ein Paar von ähnlichen Kugelansätzen (22, 22a) durch Eingreifen mit einer Presspassung des Wellenabschnitts (26a) eines Kugelansatzes (22a) in die Eingreiföffnung (30) des anderen Kugelansatzes (22) zusammengebaut wird und der Wellenabschnitt (26) des anderen Kugelansatzes (22) mit einer Presspassung in der Einbauöffnung (28) der Krampe (10) zum Eingreifen kommt.

5. Verfahren gemäß Anspruch 4, **dadurch gekennzeichnet, dass** jedes Paar Kugelansätze (22, 2a) in einer jeweiligen vorbestimmten Position relativ zur Achse der Einbauöffnung rotiert und darin eingebaut ist.

6. Verfahren gemäß einem der vorherigen Ansprüche, **dadurch gekennzeichnet, dass** der Wellenabschnitt (26, 26a) des Kugelansatzes (22, 22a) mit einer gerändelten peripheren Oberfläche versehen ist.

7. Verfahren gemäß Anspruch 1, **dadurch gekennzeichnet, dass** der Wellenabschnitt (48) des Kugelansatzes (44) mit einem Führungsabschnitt und mit einem zum Führungsabschnitt axial anliegenden Interferenzabschnitt versehen ist, wobei der Führungsabschnitt drehbar in der Einbauöffnung der Krampe (10, 40) zur Rotation der vorbestimmten Position eingebaut ist, und der Kugelansatz (44) dann axialem Druck unterzogen wird, um den Interferenzabschnitt mit einer Presspassung in die Einbauöffnung einzuführen.

8. Verfahren gemäß Anspruch 7, **dadurch gekennzeichnet, dass** der Führungsabschnitt mit sich axial erstreckenden Eingreifrippen (80) versehen ist, die ausgelegt sind, um den Wellenabschnitt in der Einbauöffnung vorab zu befestigen und dabei gleichzeitig die Drehung des Kugelansatzes zu ermöglichen.

9. Verfahren gemäß Anspruch 7 oder 8, **dadurch gekennzeichnet, dass** der Führungsabschnitt zwischen dem Interferenzabschnitt und dem Kugelteil vorgesehen wird und axialer Druck auf den Wellenteil des Kugelansatzes ausgeübt wird.

10. Verfahren gemäß Anspruch 7 oder 8, **dadurch gekennzeichnet, dass** der Interferenzabschnitt zwischen dem Führungsabschnitt und dem Kugelteil vorgesehen ist und axialer Druck auf den Kugelteil des Kugelansatzes ausgeübt wird.

11. Verfahren gemäß Anspruch 1, **dadurch gekennzeichnet, dass** der Kugelabschnitt des Kugelansatzes mit einer Eingreiferweiterung gegenüber dem Wellenabschnitt vorgesehen ist.

12. Verfahren gemäß Anspruch 11, **dadurch gekennzeichnet, dass** die Eingreiferweiterung mit einem Rückhalteflansch (54) (vorgesehen ist und eine balgartige Versiegelungsmuffe (60) über wenigstens einen Teil des Kugelabschnitts eingepasst wird und axial vom Rückhalteflansch (54) zurückgehalten wird.

13. Verfahren gemäß Anspruch 1 bis 12, **dadurch gekennzeichnet, dass** die Krampe (10, 40), der Kugelansatz und das Verbindungselement mit einer lösbaren Einpassung der Kugelansatzwelle in der Einbauöffnung der Krampe zusammengebaut werden, wobei der daraus resultierende Zusammenbau auf einem Messblock installiert und durch wenigstens einen kompletten Wischzyklus betrieben wird, ein Fehler des resultierenden Wischmusters festgestellt wird, der festgestellte Fehler durch Drehen des Kugelansatzes um die Achse des Wellenabschnitts um einen Umfang korrigiert wird, der zur Korrektion des festgestellten Fehlers bestimmt wurde, und der Wellenabschnitt des Kugelabschnitts dauerhaft mit einer Presspassung in der Einbauöffnung befestigt wird.

14. Antriebsverbindung für ein Kraftfahrzeug-Windschutzscheiben-Wischsystem mit einer Krampe (10, 40), einem Verbindungselement (14,1 6) und wenigstens einem das Verbindungselemnt (14, 16) mit der Krampe (10, 40) verbindenden Kugelgelenk,
- wobei das Kugelgelenk einen Kugelansatz (22) mit einem Kugelabschnitt (24) und einem Wellenabschnit (26) umfasst, der eine Achse (A1) aufweist, die im Verhältnis zu einer durch die Mitte des Kugelabschnitts (24) durchtretenden Achse (A2) verschoben ist;
- wobei die Krampe (10) eine Einbauöffnung (28) aufweist; und
- der Wellenabschnitt (26) des Kugelansatzes (22) in die Einbauöffnung (28) in einer vorbestimmten Winkelposition um die Achse (A1) des Wellenabschnitts presseingepasst wird;
**dadurch gekennzeichnet, dass**
der Kugelabschnitt (24) des Kugelansatzes (22) eine zylindrische Eingreiföffnung (30) aufweist, die sich einwärts koaxial zum Wellenabschnitt von einem axialen Ende gegenüber dem Wellenabschnitt erstreckt, in dem die Eingreiföffnung (30) ein rotierendes Presspassungswerkzeug aufnimmt, das den Kugelansatz in der Presspassungsstufe axialem Druck unterzieht.

15. Antriebsverbindung gemäß Anspruch 14, in der der Kugelabschnitt (24) des Kugelansatzes (22) eine Flachplatte auf ihrem axialen Ende gegenüber dem Wellenabschnitt aufweist und sich die Eingreiföffnung von der Flachplatte erstreckt.

16. Antriebsverbindung gemäß Anspruch 14 oder Anspruch 15, umfassend ein weiteres Kugelgelenk für die Verbindung der Krampe mit einem weiteren Verbindungselement, wobei das weitere Kugelgelenk einen weiteren Kugelansatz (22a) mit einem Kugelabschnitt (24a) und einem Wellenabschnitt (26a) aufweist, wobei der genannte Wellenabschnitt (26a) eine Achse aufweist, die im Verhältnis zu einer durch die Mitte des genannten Kugelabschnitts hindurchtretenden Achse verschoben ist, und der genannte Wellenabschnitt des genannten weiteren Kugelansatzes in die zylindrische Eingreiföffnung presseingepasst ist.

17. Antriebsverbindung gemäß Anspruch 14 bis 16, in dem der Kugelabschnitt des Kugelansatzes eine gerändelte periphere Oberfläche hat.

18. Antriebsverbindung gemäß Anspruch 14 bis 16, in der der Wellenabschnitt des Kugelansatzes eine Vielzahl von sich axial erstreckenden Eingreifrippen aufweist, die sich leicht auf der peripheren Oberfläche des Wellenabschnitts erstrecken.

19. Antriebsverbindung gemäß Anspruch 18, in dem sich eine gerändelte periphere Eingreifoberfläche auf einem ersten axialen Abschnitt erstreckt und sich die Eingreifrippen auf einem zweiten axialen Abschnitt des dem ersten Abschnitt benachbarten Wellenabschnitts erstrecken.

20. Antriebsverbindung gemäß Anspruch 14 bis 19, in der der Kugelabschnitt des Kugelansatzes eine mit einem radial hervorstehenden Rückhalteflansch (54) versehene axiale Eingreiferweiterung aufweist, und eine balgartige Versiegelungsmuffe (60) über wenigstens einen Teil des Kugelabschnitts eingepasst ist und axial durch den Rückhalteflansch (54) zurückgehalten wird.

## Revendications

1. Procédé permettant de préassembler une liaison d'entraînement pour un système d'essuie-glace d'automobile, la liaison comprenant une bielle (10), un élément de liaison (14, 16, 42) et au moins un joint à rotule reliant l'élément de liaison à la bielle (10, 40), comprenant les étapes consistant à :
a) doter un piton à rotule (22, 44) d'une partie de rotule (24) et d'une partie d'arbre (26, 48) qui a un axe (A1) décalé par rapport à un axe (A2) passant par le centre de la partie de rotule (24) ;
b) fournir un trou de montage cylindrique (28) dans ladite bielle (10, 40) ;
c) présenter une extrémité de la partie d'arbre (26) d'une manière coaxiale devant le trou de montage (28) ;
d) faire tourner le piton à rotule (22) autour de l'axe (A1) de la partie d'arbre (26) jusqu'à une position prédéterminée par rapport à ladite bielle (10, 40) ;
e) et ajuster avec serrage la partie d'arbre (26) du piton à rotule (22) dans le trou de montage (28) tandis que le piton à rotule (22) est maintenu dans la position prédéterminée autour de l'axe (A1) du trou de montage (28),
**caractérisé en ce qu'**un outil de compression rotatif est engagé dans un trou d'engagement cylindrique (30) qui s'étend de manière coaxiale avec la partie d'arbre (26) à partir d'une extrémité axiale opposée à la partie d'arbre dans la partie de rotule pour faire tourner l'élément de piton jusqu'à la position prédéterminée et soumettre le piton à rotule à une pression axiale dans l'étape d'ajustement avec serrage.

2. Procédé selon la revendication 1, **caractérisé en ce que** la position prédéterminée du piton à rotule (22) est déterminée en mesurant la distance entre la périphérie de la partie de rotule et une référence fixe.

3. Procédé selon l'une quelconque des revendications précédentes, **caractérisé en ce que** l'outil de compression (32) possède une partie de tête ayant des doigts de serrage radialement flexibles et un élément d'étalement permettant de pousser les doigts de serrage radialement vers l'extérieur jusqu'à un engagement avec serrage des parties de paroi interne du trou d'engagement (30).

4. Procédé selon l'une quelconque des revendications précédentes, **caractérisé en qu'**une paire de pitons à rotule semblables (22, 22a) est assemblée par l'engagement, au moyen d'un ajustement avec serrage, de la partie d'arbre (26a) du piton à rotule (22a) dans le trou d'engagement (30) de l'autre piton à rotule (22), et la partie d'arbre (26) de l'autre piton à rotule (22) est engagée au moyen d'un ajustement avec serrage dans le trou de montage (28) de la bielle (10).

5. Procédé selon la revendication 4, **caractérisé en ce que** chaque piton à rotule de la paire de pitons à rotule (22, 22a) est mis en rotation jusqu'à et monté dans une position prédéterminée respective par rapport à l'axe du trou de montage.

6. Procédé selon l'une quelconque des revendications précédentes, **caractérisé en que** la partie d'arbre (26, 26a) du piton à rotule (22, 22a) est dotée d'une surface périphérique moletée.

7. Procédé selon la revendication 1, **caractérisé en ce que** la partie d'arbre (48) du piton à rotule (44) est dotée d'une section de guidage et d'une section d'interférence axialement adjacente à la section de guidage, la section de guidage est reçue de manière rotative dans le trou de montage de la bielle (10, 40) en vue d'une rotation jusqu'à la position prédéterminée, et le piton à rotule (44) est ensuite soumis à une pression axiale pour introduire la section d'interférence au moyen d'un ajustement avec serrage dans le trou de montage.

8. Procédé selon la revendication 7, **caractérisé en ce que** la section de guidage est dotée de nervures d'engagement s'étendant dans la direction axiale (80) dimensionnées de manière à fixer au préalable la partie d'arbre dans le trou de montage tout en permettant la rotation du piton à rotule.

9. Procédé selon la revendication 7 ou 8, **caractérisé en ce que** la section de guidage est prévue entre la section d'interférence et la partie de rotule et une pression axiale est exercée sur la partie d'arbre du piton à rotule.

10. Procédé selon la revendication 7 ou 8, **caractérisé en ce que** la section d'interférence est prévue entre la section de guidage et la partie de rotule et une pression axiale est exercée sur la partie de rotule du piton à rotule.

11. Procédé selon la revendication 1, **caractérisé en ce que** la partie de rotule du piton à rotule est dotée d'une extension d'engagement opposée à la partie d'arbre.

12. Procédé selon la revendication 11, **caractérisé en ce que** l'extension d'engagement est dotée d'une bride de retenue (54) et **en ce qu'**un manchon d'étanchéité de type soufflet (60) est ajusté au-dessus d'au moins une partie de la partie de rotule et est retenu axialement par la bride de retenue (54).

13. Procédé selon l'une quelconque des revendications 1 à 12, **caractérisé en ce que** la bielle (10, 40), le piton à rotule et l'élément de liaison sont assemblés avec un ajustement détachable de l'arbre du piton à rotule dans le trou de montage de la bielle, l'ensemble obtenu est installé sur un banc de mesure et activé par le biais d'un cycle de balayage complet, une erreur du motif de balayage obtenu est détectée, l'erreur détectée est corrigée en faisant tourner le piton à rotule autour de l'axe de la partie d'arbre d'une quantité déterminée pour corriger l'erreur détectée, et la partie d'arbre du piton à rotule est fixée de manière permanente dans le trou de montage à l'aide d'un ajustement avec serrage.

14. Liaison d'entraînement pour un système d'essuie-glace d'automobile, comprenant une bielle (10, 40), un élément de liaison (14, 16) et au moins un joint à rotule reliant l'élément de liaison (14, 16) à la bielle (10, 40),
- le joint à rotule comprenant un piton à rotule (22) ayant une partie de rotule (24) et une partie d'arbre (26) qui possède un axe (A1) décalé par rapport à un axe (A2) passant par le centre de la partie de rotule (24) ;
- la bielle (10) ayant un trou de montage (28) ; et
- la partie d'arbre (26) du piton à rotule (22) étant ajustée avec serrage dans le trou de montage (28) dans une position angulaire prédéterminée autour de l'axe (A1) de la partie d'arbre,
**caractérisé en ce que** :
la partie de rotule (24) du piton à rotule (22) possède un trou d'engagement cylindrique (30) qui s'étend vers l'intérieur d'une manière coaxiale avec la partie d'arbre à partir d'une extrémité axiale opposée à la partie d'arbre, dans lequel le trou d'engagement (30) reçoit un outil de compression rotatif qui soumet le piton à rotule à une pression axiale au cours de l'étape d'ajustement avec serrage.

15. Liaison d'entraînement selon la revendication 14, dans laquelle la partie de rotule (24) du piton à rotule (22) possède une partie plate sur son extrémité axiale opposée à la partie d'arbre et le trou d'engagement s'étend à partir de la partie plate.

16. Liaison d'entraînement selon la revendication 14 ou la revendication 15, comprenant un autre joint à rotule permettant de relier la bielle à un autre élément de liaison, l'autre joint à rotule ayant un autre piton à rotule (22a) doté d'une partie de rotule (24a) et d'une partie d'arbre (26a), ladite partie d'arbre (26a) ayant un axe décalé par rapport à un axe passant par le centre de ladite partie de rotule, et ladite partie d'arbre dudit autre piton à rotule étant ajustée avec serrage dans le trou d'engagement cylindrique.

17. Liaison d'entraînement selon l'une quelconque des revendications 14 à 16, dans laquelle la partie d'arbre du piton à rotule possède une surface périphérique moletée.

18. Liaison d'entraînement selon l'une quelconque des revendications 14 à 16, dans laquelle la partie d'arbre du piton à rotule possède une pluralité de nervures d'engagement s'étendant dans la direction axiale et faisant légèrement saillie sur la surface périphérique de la partie d'arbre.

19. Liaison d'entraînement selon la revendication 18, dans laquelle une surface d'engagement périphérique moletée s'étend sur une première section axiale et les nervures d'engagement s'étendent sur une deuxième section axiale de la partie d'arbre adjacente à la première section.

20. Liaison d'entraînement selon l'une quelconque des revendications 14 à 19, dans laquelle la partie de rotule du piton à rotule possède une extension d'engagement axiale dotée d'une bride de retenue faisant saillie dans la direction axiale (54), et un manchon d'étanchéité de type soufflet (60) est ajusté au-dessus d'au moins une partie de la partie de rotule et est retenu axialement par la bride de retenue (54).
